(19) Europäisches Patentamt
European Patent Office
Office européen des brevets

(11) **EP 2 886 901 B1**

(12) **EUROPEAN PATENT SPECIFICATION**

(45) Date of publication and mention of the grant of the patent:
**13.02.2019 Bulletin 2019/07**

(51) Int Cl.:
***F16D 48/06*** *(2006.01)*

(21) Application number: **13198004.7**

(22) Date of filing: **18.12.2013**

(54) **Method for controlling the drivetrain of a vehicle**

Verfahren zur Steuerung des Antriebsstrangs eines Fahrzeugs

Procédé de contrôle de la transmission d'un véhicule

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.06.2015 Bulletin 2015/26**

(73) Proprietor: **AVL List GmbH**
**8020 Graz (AT)**

(72) Inventors:
• **Bachinger, Markus**
 **8061 St. Radegund (AT)**
• **Stolz, Michael**
 **8045 Graz (AT)**

• **Ebner, Wolfgang**
 **8761 Poels (AT)**

(74) Representative: **Babeluk, Michael**
 **Patentanwalt**
 **Florianigasse 26/3**
 **1080 Wien (AT)**

(56) References cited:
**EP-A1- 2 141 379    EP-A1- 2 634 058**
**WO-A1-2008/036014    DE-A1-102012 207 364**
**DE-A1-102012 209 755    DE-A1-102013 200 827**
**US-A1- 2013 178 330**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

The present invention relates to a method according to the appended claims. State-of-the-art publications are EP2141379, WO2008/036014, DE102013200827, DE102012207364 and EP2634058.

The drivetrain of modern vehicles comprises often several friction elements, like clutches in a dual clutch gearbox. It is essential for driveability to control these clutches in an appropriate way, so that bumps and vibrations are minimised.

A method for controlling the drivetrain of such vehicle, namely for controlling the clutches of said drivetrain, consists in principle of sampling physical data, like speed of different shafts, forces, torques and other variables like temperature of parts of the gearbox and calculating at least one output variable, e.g. oil pressure of a hydraulic actuator controlling a certain clutch.

However, the physical data are not readily available in a way so that such calculation can be performed in a way that it is possible to perform the calculation in a satisfying manner. Some of necessary variables may not be available in a vehicle since it is cumbersome to measure them, like torque in shafts of a gearbox. Other variables are measured, but the quality of measurement is not sufficient for proper calculations.

To overcome these problems it has been proposed to use calculation models for enhancing control of different elements of the drivetrain. The present invention may preferably be applied to methods for controlling elements of a drivetrain using such calculation models, but is not limited to such methods.

Friction elements represent a major challenge for fixed step modelling. In an automotive drivetrain those elements can be found in clutches, brakes and mechanical synchronizing elements and will further be referred to as clutches. Reason for the difficulty is the discontinuity of the behaviour of the system at the change of slipping to locking since friction forces change rapidly.

An exemplary model including a proposal for control of a dry friction element is shown in A. Serrarens, M. Dassen, and M. Steinbuch, "Simulation and Control of an Automotive Dry Clutch", in American Control Conference, 2004. Proceedings of the 2004, vol. 5, 2004, pp. 4078-4083 vol.5.

Various strategies for friction modelling in general are compared in H. Olsson, K. Aström, C. Canudas de Wit, M. Gäfvert, and P. Lischinsky, "Friction Models and Friction Compensation", European Journal of Control, vol. 4, no. 3, pp. 176 - 195, 1998.

Adaptive time step approaches for accurate clutch slip speed zero crossing detection are used in variable step simulation. The adequacy of different friction modelling approaches for real-time simulation is discussed in M. Bataus and A. Maciac, "Automotive Clutch Models for Real Time Simulation", in Proceedings of the Romanian Academy, Series A, vol. 12, no. 2. The publishing house of the Romanian Academy, 2011, pp. 109-116.

For fixed time step simulation a solution is disclosed in D. D. Girard, "Fixed step friction model". in Proceedings of the 1983 summer computer simulation conference, Vancouver B.C., Canada, 1983, pp. 302-308. This paper suggests to perform a correction at the next time step after a clutch slip speed zero crossing event.

A different approach for fixed time step simulation is presented in R. Kikuuwe, N. Takesue, A. Sano, H. Mochiyama, and H. Fujimoto, "Fixed-Step Friction Simulation: From Classical Coulomb Model To Modern Continuous Models", in Intelligent Robots and Systems, 2005. (IROS 2005). 2005 IEEE/RSJ International Conference on, 2005, pp. 1009-1016.: This approach takes advantage of the fact that friction decreases kinetic energy. The torque of a friction element is adapted such that the zero crossing takes place at the exact sampling instance. The inherent characteristic of this approach that friction does not change the slip speed sign does not hold in general for a system containing multiple friction elements due to the mutual dependency of the clutch torques.

Both fixed time step approaches have in common that it is not straight forward to extend the proposed ideas to systems with multiple friction elements.

It is the object of the present invention to overcome the above problems and to provide a method to control at least one friction element, preferably multiple friction elements by using modelling of the physical systems including said friction element in fixed time steps.

This is accomplished by the method of claim 1.

Basic idea of the invention is that the physical system changes its behaviour abruptly when a clutch slip speed sign changes or when a clutch becomes locked.

As mentioned above the time frame for conducting calculations is discretized. Clutch zero slip speed crossing events have to be treated additionally, as in general the fixed time steps will miss these events. These clutch zero slip speed crossing events will be referred to as "zero crossing events" or rather inexactly as "(clutch) locking events" as the clutch slip may also continue slipping with changed sign of slip speed.

These zero crossing events will take place in between two sampling time instances. Due to the changes of the behaviour of the system after such locking events the calculations are not appropriate, i.e. calculated values differ significantly from the real physical parameters.

The present invention overcomes these problems by exceptionally leaving the fixed time frame for calculations and conducting calculation earlier so that it meets the time instant of zero crossing. After that calculation at the regular time instants is resumed. It has to be noted that the calculation itself is not advanced necessarily, since the calculation may be conducted at a time as usual, but the values which are calculated referring to a time instant of zero crossing.

In a preferred embodiment of the invention a simulation model is used to calculate approximations of physical data which are not readily observable including slip speed of the friction elements and shaft torques.

Further preferred embodiments of the invention are subject of dependent claims.

Now the invention will be explained by preferred embodiments by reference to the enclosed drawings. In these drawings:

Fig. 1    shows a typical drivetrain in simplified form;

Fig. 2    shows a block diagram of the control unit controlling friction elements;

Fig. 3    shows a diagram explaining a first preferred embodiment of the invention;

Fig. 4    shows a diagram explaining a second preferred embodiment of the invention;

Fig. 5    shows a diagram explaining the effect of not considering clutch zero crossings in a fixed time step simulation (black lines) and compares it to a reference simulation (grey lines);

Fig. 6    shows a diagram detecting and treating the zero crossings as defined in the first preferred embodiment of the invention (black lines) and compares it to the reference simulation (grey lines);

Fig. 7    shows a diagram detecting and treating the zero crossings as defined in the first preferred embodiment of the invention but using a continuous time model (black lines) and compares it to the reference simulation (grey lines);

Fig. 8    shows a diagram in which the simplified embodiment of the invention is compared to an exact embodiment, which is less adequate for implementation in control units.

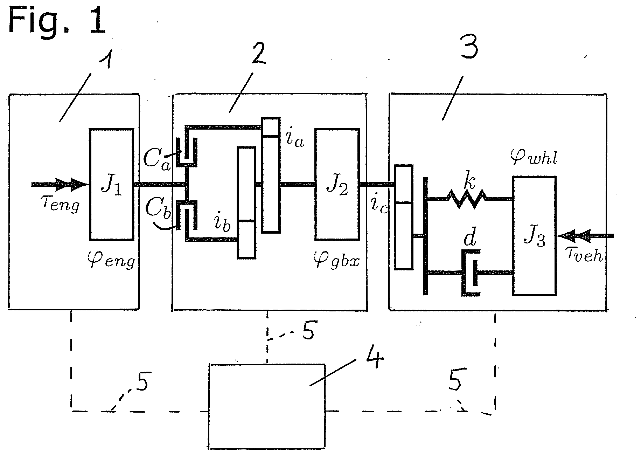

The invention is demonstrated on a simplified two-speed dual clutch transmission with lumped inertias at engine side and transmission output shown in Fig. 1.

The left box 1 represents a combustion engine 1 of a vehicle, transmitting its torque to a gearbox 2 which in this example is a dual clutch transmission comprising two clutches $C_a$ and $C_b$. Reference number 3 designates the drivetrain downstream of the gearbox and the rest of the vehicle.

A control unit 4 gets data from several sensors (not depicted) in the vehicle, from the combustion engine and from the gearbox and controls the clutches $C_a$ and $C_b$ inter alia via data lines 5. Combustion engine and vehicle brakes may also be controlled.

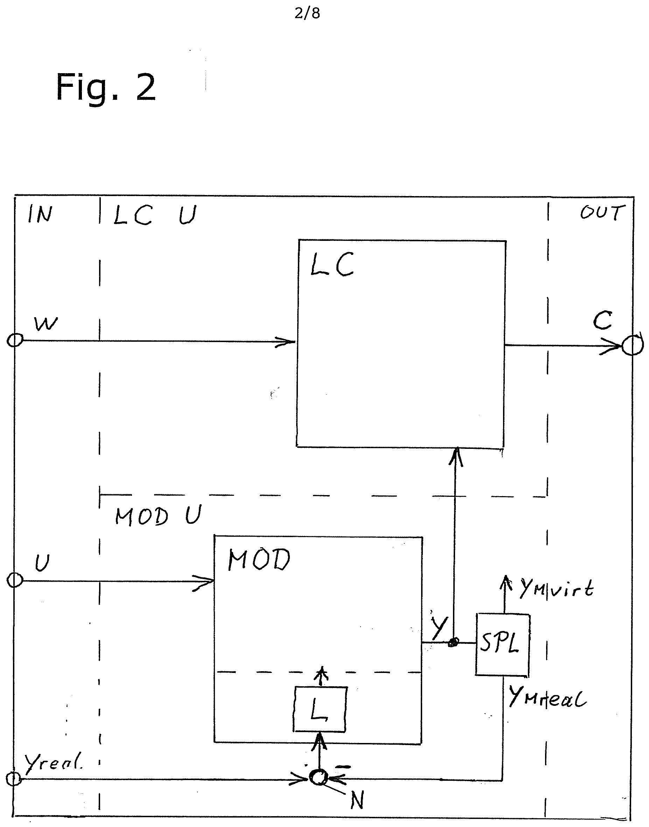

Fig. 2 shows the control unit 4 in detail. Input interface IN is in connection with different sensors and the control unit of the combustion engine 1 in order to receive data w, u and $y_{real}$. Logical control unit LC U contains a usual control circuit LC using data w and y to calculate control signals c which are outputted via an output interface OUT. Essential for the present invention is a model unit MOD U hosting a model MOD in which data u is converted into data y which is used by control circuit LC.

The different data and signals used in Fig. 2 are now explained:

w:    ambient signals which influence control of friction elements. Examples: temperature of hydraulic oil, ambient temperature.

u:    input signals which are needed for modelling. Examples: torque of combustion engine, vehicle torque load, torques $\tau_A$, $\tau_B$ at clutches $C_a$ and $C_b$. These values may be calculated from sensor data or control unit internal demand values.

y:    Output variables which are calculated by the model.

$y_{Mreal}$:    part of y corresponding to physical data which are explicitly measured via sensors or derived from sensor values in LCU. Examples: speed of engine, speed of vehicle, ...;

$y_{Mvirt}$:    part of y corresponding to physical data which are not explicitly measured via sensors and not derived from sensor values in LCU with sufficient accuracy The knowledge of $y_{Mvirt}$ signals allows improving driveline control.

Examples: driveline shaft torques, internal driveline shaft speeds.

$y_{real}$   data corresponding to $y_{Mreal}$ variables actually measured via sensors or derived from sensor values in LCU.

c:   control signals for friction elements. e.g. clutches $C_a$ and $C_b$. Example: hydraulic demand pressure for actuators.

In node N signals $y_{Mreal}$ are subtracted from $y_{real}$ to get a correction input to correction matrix L which will be explained in detail below under reference to equations (25) and (26).

The signals y are transmitted to control circuit LC as stated above.

Now the symbols used in the calculations which are explained later are introduced with reference to Fig. 1: The transmission output is connected to the vehicle inertia via a flexible shaft represented by a spring and a damping element. In Fig. 1 the symbols k and d denote stiffness and damping parameters of the lumped flexible shaft. A combustion engine delivers the shaft torque $\tau_{eng}$ to inertia $J_1$ that represents basically the inertia of the engine. For simulation of real driving conditions $\tau_{eng}$ is derived via a dynamic model of the combustion engine actuated by the driver through the acceleration pedal. The shaft torque $\tau_{veh}$ provides load to $J_3$ and represents the vehicle load torque. For simulation $\tau_{veh}$ considers air drag, wheel rolling resistance and grade force and is not actuated by the driver directly.

The clutches $C_a$ and $C_b$ propel the drivetrain with the respective torques $\tau_a$ and $\tau_b$. $\tau$ is then proportional to the pressure p applied on the clutch plates, the coefficient of kinetic friction $\mu_k$ as well as the sign of speed difference of the primary and secondary clutch plates. In case of a locking clutch one mechanical degree of freedom is lost and the clutch has to be treated as a stiff connection of its primary and secondary shaft. The maximum transferable torque over that stiff connection is a function of the applied pressure and the coefficient of static friction $\mu_s$.

A hydraulic filling model converts an actuating current to an applied pressure and finally to a transmitted torque at the clutches.

Inertia $J_1$ models all rotating elements from the combustion engine to the primary clutch sides (e.g. shaft, flywheel, pressure plates). Inertia $J_2$ considers inertias at the output of the transmission concentrating all rotating elements between the secondary clutch sides and the differential gearbox. The inertia of the vehicle including wheels and side shafts is represented by $J_3$.

The following differential equations describe the system in case of unlocked clutches:

$$\begin{aligned}
J_1 \ddot{\varphi}_{eng} &= \tau_{eng} - \tau_a - \tau_b \\
J_2 \ddot{\varphi}_{gbx} &= i_a \tau_a + i_b \tau_b - i_c^{-1} \tau_{sft} \\
J_3 \ddot{\varphi}_{whl} &= \tau_{sft} - \tau_{veh} \\
\tau_{sft} &= k(i_c^{-1}\varphi_{gbx} - \varphi_{whl}) + d(i_c^{-1}\dot{\varphi}_{gbx} - \dot{\varphi}_{whl}) \\
v_{veh} &= r_{whl}\dot{\varphi}_{whl}
\end{aligned} \qquad (1)$$

Explicit notation of time dependence is omitted for the sake of readability.

There are four inputs to the model:

- $\tau_{eng}$ is a dynamic function of acceleration pedal position, engine speed and limitations;

- $\tau_{veh}$ is a function of vehicle grade force, rolling resistance and air drag. As air drag depends on $v^2_{veh}$ which is an output of the model, there is an external nonlinear feedback route that has to be considered.

- $\tau_a$ and $\tau_b$ are functions of the applied pressure on the clutch plates for each unlocked clutch.

A locking clutch decreases the mechanical degrees of freedom of the system. The example system can therefore be described by two equations only. Locking of both clutches in this specific drivetrain layout is impossible (due to mechanical constraints as $i_a - i_b \neq 0$). Direct implementation of true-locking clutches within the example results in three models for the system: one in case of both clutches unlocked, a second for $C_a$ locking and $C_b$ unlocked and another one for the vice versa case. Simulation involves switching between the correctly initialized models. In general the number of models increases with the number of clutches/brakes at the power of 2. Implementing this approach becomes rather complex for general drivetrain configurations when several clutches are involved.

An alternative option is to use quasi-locking friction models, which approximate the near zero slip by a large viscosity without actual locking and without loss of a mechanical degree-of-freedom. However they require stiff solvers as the torque gradient near zero slip is very high.

Equations (1) are still valid in case of locked clutch(es). Only one additional constraint for each locked clutch has to be considered. At each locked clutch the primary clutch plate speed is equal to the secondary clutch plate speed:

$$\dot{\varphi}_{sl} = \dot{\varphi}_{pri} - \dot{\varphi}_{sec} = 0 \qquad (2)$$

As for the transition to locking (2) is fulfilled, it is sufficient in case of a locked clutch to ensure that the accelerations of the primary and secondary clutch plates are equal:

$$\ddot{\varphi}_{sl} = 0 \qquad (3)$$

Due to the mutual dependency of clutch torques the set of algebraic equations resulting from (3) has to be solved at once with respect to the torques of all locked clutches.

As mentioned above a precondition for a clutch to lock up is equal speed of primary and secondary clutch plates. The clutch gets locked up, if the pressure dependent transmitted torque $\tau(p)$ of one clutch is higher than the required lockup torque $\tau_{lk}$. Consequently the conditions for locking are separately defined for each clutch:

$$\dot{\varphi}_{sl} = 0 \quad \wedge \quad |\tau_{lk}| \leq |\tau(p)| \sim \mu_k f(p) \qquad (4)$$

A locked clutch can only break away, if the transmitted torque $\tau_{lk}$ is higher than the pressure dependent holding torque of the clutch $\tau(p)$.

The unlocking condition for each clutch is therefore:

$$|\tau_{lk}| \geq |\tau(p)| \sim \mu_s f(p) \qquad (5)$$

The transmitted torque for locked clutches $\tau_{lk}$ depends on the locking states of the clutches while the locking conditions also depend on $\tau_{lk}$. Analysis of the dependency reveals that the resulting algebraic loop exists only at the exact time instant when a clutch gets locked. At that time instant when slip is zero allows lockup depending on $\tau_{lk}$, however calculation of $\tau_{lk}$ depends on the clutch lockup state. For the possibly locking up clutch $\tau_{lk}$ is not calculated due to the mutual influence of other locked clutches. This dependency is solved by a preliminary calculation of $\tau_{lk}$ for all locked clutches as well as those with slip zero. The resulting $\tau_{lk}$ is used for locking up detection (lockup or fly-through).

Finally $\tau_{lk}$ is computed depending on the detected locked up clutches.

The following definition of states x and inputs u

$$\mathbf{x} = \begin{bmatrix} \dot{\varphi}_{eng} & \dot{\varphi}_{gbx} & i_c^{-1}\varphi_{gbx} - \varphi_{whl} & \dot{\varphi}_{whl} \end{bmatrix}^T$$
$$\mathbf{u} = \begin{bmatrix} \tau_{eng} & \tau_{veh} & \tau_a & \tau_b \end{bmatrix}^T \qquad (6)$$

and an assumed linear characteristic of the flexible shaft allow a linear time-invariant state-space representation of system (1).

The continuous time model can be derived

$$\mathbf{M}\dot{\mathbf{x}} = \widetilde{\mathbf{A}}\mathbf{x} + \widetilde{\mathbf{B}}\mathbf{u}$$
$$\mathbf{y} = \mathbf{C}\mathbf{x} \qquad (7)$$

with:

$$\widetilde{\mathbf{A}} = \begin{bmatrix} 0 & 0 & 0 & 0 \\ 0 & -\frac{d}{i_c^2} & -\frac{k}{i_c} & \frac{d}{i_c} \\ 0 & \frac{1}{i_c} & 0 & -1 \\ 0 & \frac{d}{i_c} & k & -d \end{bmatrix}, \quad \mathbf{C} = \begin{bmatrix} 1 & 0 & 0 & 0 \\ 0 & 1 & 0 & 0 \\ 0 & 0 & 0 & r_{whl} \end{bmatrix}$$

$$\widetilde{\mathbf{B}} = \begin{bmatrix} 1 & 0 & -1 & -1 \\ 0 & 0 & i_a & i_b \\ 0 & 0 & 0 & 0 \\ 0 & -1 & 0 & 0 \end{bmatrix}, \quad \mathbf{M} = \begin{bmatrix} J_1 & 0 & 0 & 0 \\ 0 & J_2 & 0 & 0 \\ 0 & 0 & 1 & 0 \\ 0 & 0 & 0 & J_3 \end{bmatrix}$$

$$(8)$$

where y - as discussed earlier - have to correspond to the signals of $y_{real}$. Note that this model uses an external nonlinear feedback path via $v^2_{veh}$ as well as the transmitted torques of locked clutches.

As discussed above the calculation of the transmitted clutch torque for locked (and instantly locking) clutches bases on (3). Model input u is dynamically split into 1) external inputs v containing the external torques, 2) the torques of unlocked clutches $\tau_{sl}$ and 3) the torques of locked clutches $\tau_{lk}$ at the corresponding time instant:

$$\widetilde{\mathbf{B}}\mathbf{u} = \begin{bmatrix} \widetilde{\mathbf{B}}_v & \widetilde{\mathbf{B}}_{sl} & \widetilde{\mathbf{B}}_{lk} \end{bmatrix} \begin{bmatrix} \mathbf{v}^T & \tau_{sl}^T & \tau_{lk}^T \end{bmatrix}^T \qquad (9)$$

For locked clutches the kinematic constraints $B_{lk}$ are enforced by the reactive torques $\tau_{lk}$. The equilibrium of power at each locked clutch leads to

$$\widetilde{\mathbf{B}}_{lk}^T \dot{\mathbf{x}} = \ddot{\boldsymbol{\varphi}}_{lk} = \mathbf{0}, \qquad (10)$$

which finally can be solved with respect to $\tau_{lk}$ using definitions in (7) and (9):

$$\tau_{lk} = -\left( \widetilde{\mathbf{B}}_{lk}^T \mathbf{M}^{-1} \widetilde{\mathbf{B}}_{lk} \right)^{-1} \widetilde{\mathbf{B}}_{lk}^T \mathbf{M}^{-1} \cdot$$
$$\cdot \left( \widetilde{\mathbf{A}}\mathbf{x} + \widetilde{\mathbf{B}}_v \mathbf{v} + \widetilde{\mathbf{B}}_{sl} \tau_{sl} \right) \qquad (11)$$

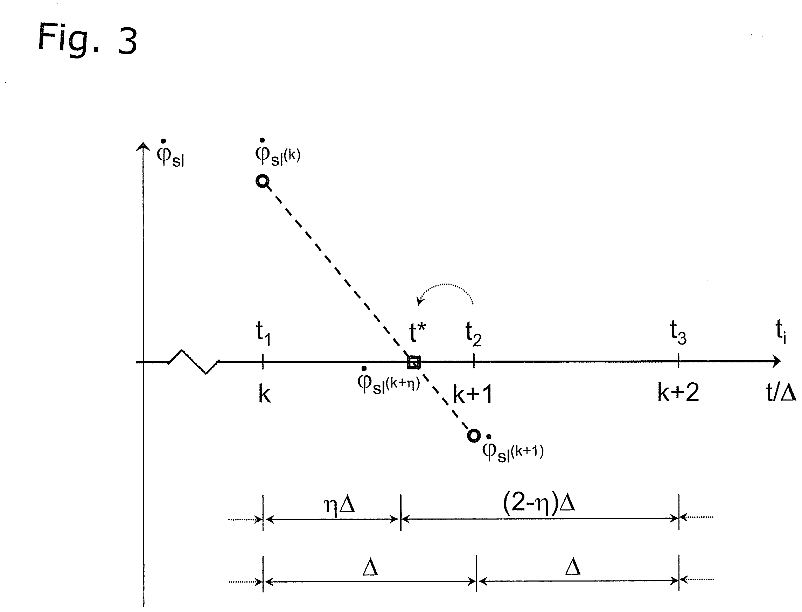

As for the desired sampling step size quasi-continuous calculation is not justifiable, the continuous time model is time-discretized. Clutch locking events have to be treated additionally, as in general the fixed time steps will miss the clutch locking events. These events will take place in between two sampling time instances (Fig. 3).

Correcting the model states at the time instant after slip speed sign reversal detection has been already proposed (by D. D. Girard and R. Kikuuwe), as well as a two-step calculation method taking advantage of the fact that friction decreases kinetic energy. Such approach adapts the friction elements torque such that the zero crossing takes place at the exact sampling instance (k+1). Besides the assumption that friction will not change the slip speed sign does not hold in general for a system containing multiple friction elements due to the mutual dependency of the clutch torques.

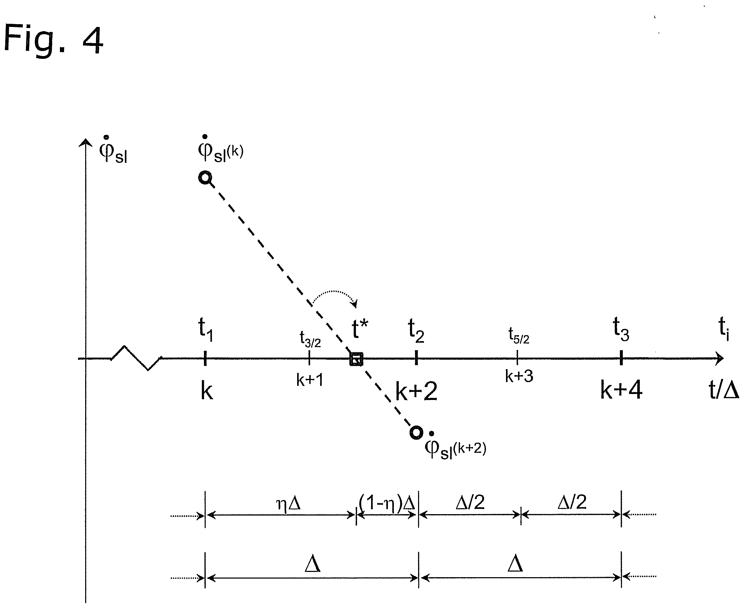

In contrast to the above mentioned solutions the present publication modifies the sampling time for sample (k+1) to exactly hit the clutch slip speed zero crossing, see Fig. 3 resp. 4. To fulfil the requirements of real-time calculation the next time instant (k+2) has to make up for the lost sampling time in the current time instant (k+1).

Fig. 3 and Fig. 4 show the two different embodiments of the invention.

A basic assumption for the proposed approach is that only one zero slip speed (zero crossing) event will happen within $2\Delta$ (first embodiment in Fig. 3) or $\Delta$ (second embodiment in Fig. 4). From a practical point of view considering the sample rates in standard drivetrain control units this assumption is well justifiable.

In the version of Fig. 3 calculations are performed in fixed time instants $t_1$, $t_2$, $t_3$ and so on separated by fixed time intervals $\Delta$. These calculations are also referred to as k, k+1, k+2 and so on. In the case of a locking event the interval $\Delta$ is shortened to $\eta\Delta$, so that the values are taken at t* rather than $t_2$. Thereafter a longer interval $\Delta*(2-\eta)$ is used to bring the calculation back to fixed time steps, in this case to $t_3$.

In Fig. 4 a version with intermediate calculations is explained, conducted at intermediate time instants of $t_{3/2}$, $t_{5/2}$ and so on, which are $\Delta/2$ after time instants $t_1$, $t_2$ respectively. In this case a locking event leads to calculation at t* instead of $t_{3/2}$ (with $t_1 < t^* < t_2$). Note that the intermediate calculation step is conducted between two clock time steps. Therefore the input signals "u" are not updated for intermediate time instants $t_{3/2}$, $t_{5/2}$ and so on, but used from the last clock instants $t_1$, $t_2$ respectively. Also the output signals 'y' are only used for the internal feedback loop of the model. Output signals 'y' are only generated at the clock time instants $t_1$, $t_2$, $t_3$ and so on.

A possible approach to derive the time span to the next zero crossing instant is presented below. Additional targets besides fixed step sampling are implementation in automotive control units with limited computing power and an easily adaptable structure for different drivetrain layouts. To comply with these targets a simplified approach is presented subsequently.

Starting point for time discretization is the linear state space model in continuous time in (7) with given starting conditions x(t=0) = $x_0$. Using

$$\mathbf{A} = \mathbf{M}^{-1}\widetilde{\mathbf{A}} \quad \text{and} \quad \mathbf{B} = \mathbf{M}^{-1}\widetilde{\mathbf{B}} \qquad (12)$$

in (7) leads to

$$\dot{\mathbf{x}} = \mathbf{A}\mathbf{x} + \mathbf{B}\mathbf{u}$$
$$\mathbf{y} = \mathbf{C}\mathbf{x}. \qquad (13)$$

Explicit fixed step numerical integration for solving (13) leads to errors increasing with sampling step size. Since the state space model is linear, parameters are constant and the sampling step size is fixed to $\Delta$, so a corresponding time discrete state space model

$$\mathbf{x}_{k+1} = \mathbf{\Phi}(\Delta)\,\mathbf{x}_k + \mathbf{H}(\Delta)\,\mathbf{u}_k$$
$$\mathbf{y}_k = \mathbf{C}\mathbf{x}_k \qquad (14)$$

can be found. Parameters $\Phi(\Delta)$ and $H(\Delta)$ can be obtained from A and B using

$$\mathbf{\Gamma}(t) = e^{\mathbf{A}t} = \sum_{k=0}^{\infty} \frac{\mathbf{A}^k t^k}{k!} \qquad (15)$$

and

$$\boldsymbol{\Gamma}(t) = \begin{bmatrix} \boldsymbol{\Phi}(t) & \mathbf{H}(t) \\ \Delta^{-1} & \mathbf{I} \end{bmatrix} \quad \text{and} \quad \boldsymbol{\Lambda} = \begin{bmatrix} \mathbf{A} & \mathbf{B} \\ * & * \end{bmatrix} \qquad (16)$$

where t=Δ denotes the sampling time of the discrete time system. The symbol e in (15) represents the matrix-exponential function. Stars * denote filling up with zeros to have a quadratic matrix Λ. Assuming that signal u is constant over one sampling time step leads to the correct solution of (13) at the sampling instances.

The transmitted torque for locked clutches $\tau_{lk}$ in the discrete time model can be calculated analogously to (11) considering the kinematic constraint matrix for locked clutches $\tilde{\mathbf{B}}_{lk}$ and substituting $\tilde{\Phi}$ for $\tilde{\mathbf{A}}$ and $[\tilde{\mathbf{H}}_v \, \tilde{\mathbf{H}}_{sl} \, \tilde{\mathbf{H}}_{lk}]$ for $[\tilde{\mathbf{B}}_v \, \tilde{\mathbf{B}}_{sl} \, \tilde{\mathbf{B}}_{lk}]$:

$$\boldsymbol{\tau}_{lk} = - \left( \tilde{\mathbf{B}}_{lk}^{T} \mathbf{M}^{-1} \tilde{\mathbf{H}}_{lk} \right)^{-1} \tilde{\mathbf{B}}_{lk}^{T} \mathbf{M}^{-1} \cdot$$
$$\cdot \left( \tilde{\boldsymbol{\Phi}} \mathbf{x} + \tilde{\mathbf{H}}_v \mathbf{v} + \tilde{\mathbf{H}}_{sl} \boldsymbol{\tau}_{sl} \right) \qquad (17)$$

For the following two approaches (14) can be rearranged as

$$\mathbf{x}_{k+1} = \mathbf{x}_k + \Delta \left( \hat{\boldsymbol{\Phi}}(\Delta) \, \mathbf{x}_k + \hat{\mathbf{H}}(\Delta) \, \mathbf{u}_k \right)$$
$$\mathbf{y}_k = \mathbf{C} \mathbf{x}_k \qquad (18)$$

where

$$\hat{\boldsymbol{\Phi}}(\Delta) = \Delta^{-1} \left( \boldsymbol{\Phi}(\Delta) - \mathbf{I} \right) \quad \text{and}$$
$$\hat{\mathbf{H}}(\Delta) = \Delta^{-1} \mathbf{H}(\Delta). \qquad (19)$$

I is the identity matrix of same dimensions as Φ. Relation (17) looks like EULER - integration, but as already mentioned (17) represents the exact solution, not an approximation.

The first approach bases on the discrete time state space model (14). Since the system matrices A and B are constant, the matrices Φ(t) and H(t) can be derived offline symbolically. One possibility to obtain Γ(t) is

$$\boldsymbol{\Gamma}(t) = \mathcal{L}^{-1} \left\{ \left( s\mathbf{I} - \boldsymbol{\Lambda} \right)^{-1} \right\} \qquad (20)$$

where $\mathcal{L}^{-1}$ denotes the inverse Laplace transform.

For fixed time instants Φ(t) and H(t) can be evaluated for t=Δ which equals directly evaluating (15) numerically. If a clutch slip speed crosses zero during the current time instant, the sampling time Δ is modified by the factor η (with 0 < η < 1) in order to hit the zero crossing at the fixed time instant. The advantage of the symbolic solution reveals at those time instants where Δ is modified to ηΔ.

The relation between clutch zero slip speeds and system states is defined by the kinematic constraint matrix also for *unlocked* clutches by

$$\widetilde{\mathbf{B}}_{sl}^{T}\, x_{k+1} = \Delta^{-1}\left(\varphi_{sl,k+1} - \varphi_{sl,k}\right) = \mathbf{0}. \qquad (21)$$

The condition for zero slip speed in (21) is used in (18) with $\Delta$ replaced by $\eta\Delta$. Resolving the resulting equation to $\eta_j$ for each unlocked clutch j

$$\eta_j = -\frac{\left(\widetilde{\mathbf{B}}_{sl}^{T}\mathbf{x}_k\right)_j}{\left[\Delta\widetilde{\mathbf{B}}_{sl}^{T}\left(\widehat{\boldsymbol{\Phi}}(\eta\Delta)\mathbf{x}_k + \widehat{\mathbf{H}}(\eta\Delta)\mathbf{u}_k\right)\right]_j} \qquad (22)$$
$$\eta = \min\left\{1,\ \eta_j\,|\,\eta_j \in (0;1)\right\}$$

is not possible explicitly as $\Gamma$ in (15) depends on $\eta\Delta$. It was therefore solved by iterations.

The resulting $\eta$ is used for time instant (k+1). The time instant (k+2) is then defined in order to catch up to the real clock:

$$\eta_{k+2} = 2 - \eta_{k+1} \qquad (23)$$

This solution can be coded in control units e.g. using lookup tables for the exponential- and harmonic-functions in $\Gamma(t)$. Nevertheless desirable simplifications to this approach are applied in the next section to reduce the required computing power and to allow an explicit solution of $\eta$ at the cost of introducing some degree of approximation.

The event of zero crossing of the discrete time model can be approximated assuming a linear interpolation between two samples shown in Fig. 2 for each *unlocked* clutch. The approximations $\widehat{\Phi}(\eta\Delta) \approx \widehat{\Phi}(\Delta)$, $\widehat{\mathbf{H}}(\eta\Delta) \approx \widehat{\mathbf{H}}(\Delta)$, $\widetilde{\mathbf{H}}_{sl}(\eta\Delta) \approx \widetilde{\mathbf{H}}_{sl}(\Delta)$ allow an explicit calculation in $\eta_{k+1}$ using (22). These approximations are valid for small time steps as:

$$\widehat{\boldsymbol{\Phi}} = \sum_{k=1}^{\infty}\frac{\mathbf{A}^{k}\Delta^{k-1}}{k!} \quad \text{and} \quad \lim_{\Delta \to 0}\widehat{\boldsymbol{\Phi}} = \mathbf{A} \qquad (24)$$

Although (24) will not hold in general for the target sampling period of a typical automotive control unit (e.g. $\Delta$ = 10 ms), the effect is limited due to the small number of inexact samples as well as due to the fact that the effect on time instant (k+1) is partly compensated by time instant (k+2), as can be seen in Fig. 2.

Now the results of a numerical simulation are discussed, which has been conducted according the present invention.

In order to compare the performance of the different approaches for fixed time step (with and without the proposed modification), numerical simulations were performed. A simulation using a standard non-stiff variable step solver (Runge-Kutta45) was chosen to be the reference simulation. In all simulation plots additionally to the speed signals the deviations of these signals $\dot\varphi_{eng}$ and $\dot\varphi_{gbx}$ to the respective reference simulation ($e_{\dot\varphi_{eng}}$ resp. $e_{\dot\varphi_{gbx}}$)| is shown.

For the purpose of simulation the model was implemented in MATLAB® Simulink®. The approaches for sampling time modification for fixed step simulation were implemented additionally.

The model was initialized for an idling combustion engine and a vehicle in standstill. An excitation sequence was defined that represents a vehicle launch with slipping launch clutch $C_a$ and a gear shift from $C_a$ to $C_b$ without traction torque interruption.

Execution within transmission control units is usually with $\Delta$ = 10 ms. The model has a complex pair of eigenvalues defining a damped oscillation. The period time of the damped oscillation is $T_p \approx 110$ ms while the time constant is $T_d \approx 55$ ms. Achieving the desired sampling time $\Delta$ = 10 ms is near the limit for modelling the dynamic behaviour of the system. In addition the desired sampling time noticeably influences the input signals, which shows up in a time delay.

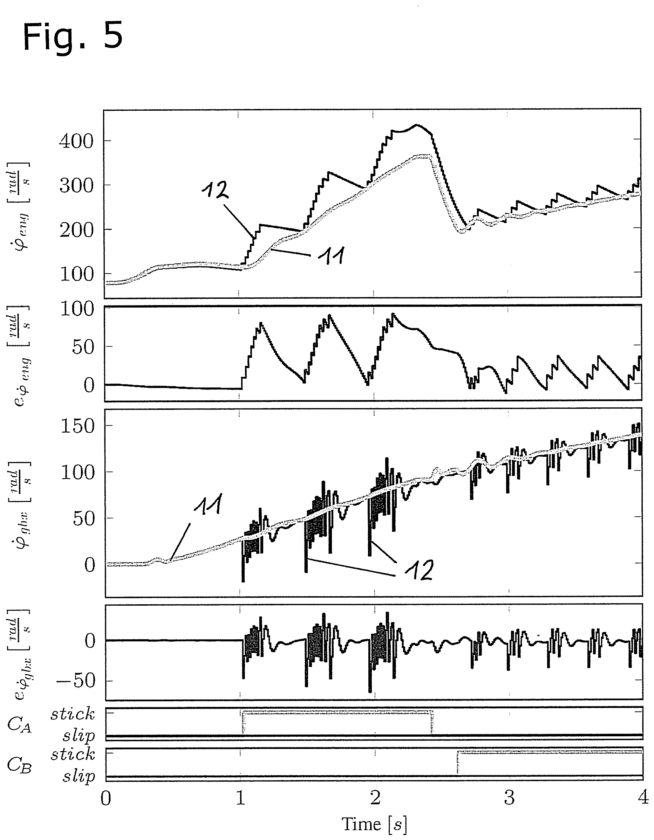

Fig. 5 shows a comparison between a fixed step simulation and "real" values obtained by a reference variable step simulation which is asumed to be very close to the physical system concerning zero slip speed event detection.

First the effects of missed zero crossing (clutch locking/unlocking) events were visualized. Therefore a standard fixed step implementation with the target sampling time $\Delta$ = 10 ms was performed and the results are compared to the reference simulation using a standard variable step solver (line 11) in Fig. 5.

Due to fastest system dynamics of T d $\approx$ 55 ms, the model was time discretized for fixed step simulation. The reference simulation shows $C_a$ locked from 1.37 - 2.43 s and $C_b$ from 2.6s on. The fixed step simulation (line 12) completely fails due to missing zero clutch slip speed events and none of the two clutches locks up at any moment.

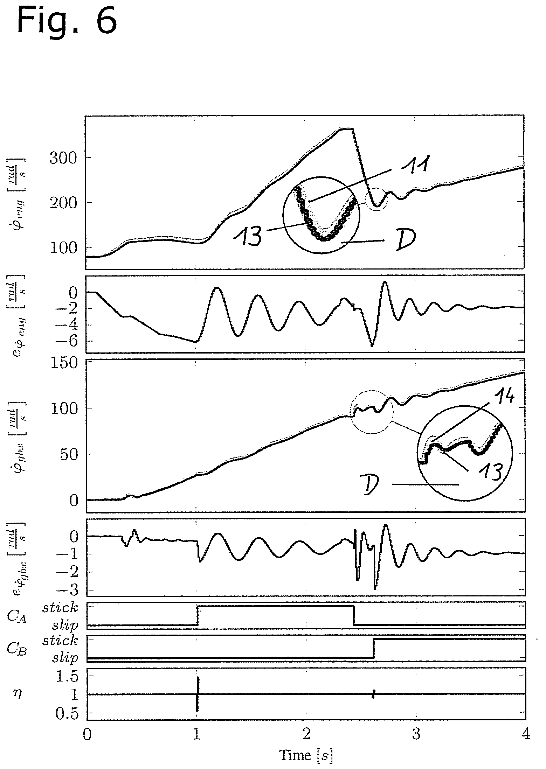

As discussed above missing zero crossing events is crucial and can be avoided by one of the algorithms proposed. Fig. 6 shows the results obtained by using the simplified approach for detection of and sampling time modification for clutch locking events using the target sampling time $\Delta$ = 10 ms. The detection is safe and accurate. The differences in the speed of engine are due to the small inertia $J_1$ and the different sampling of the ramp-shaped input torque $\tau_{eng}$ and lead to an earlier locking of clutch $C_a$ of 0.13 s compared to the reference. The energy content is low compared to the vehicle mass and therefore after clutch locking the speed difference is nearly caught up again. Locking of clutch $C_b$ is, equal to the reference, at 2.6 s.

The differences between reference (line 11) and tested solution (line 13) are very small and visible only in detail D.

It is worth mentioning that in order to obtain similar results as shown in Fig. 6 without sampling time modification the fixed step size has to be reduced to $\Delta$ = 0,1 ms. The proposed technique therefore allows an increased sampling step size by factor 100 for the present exemplary drivetrain model.

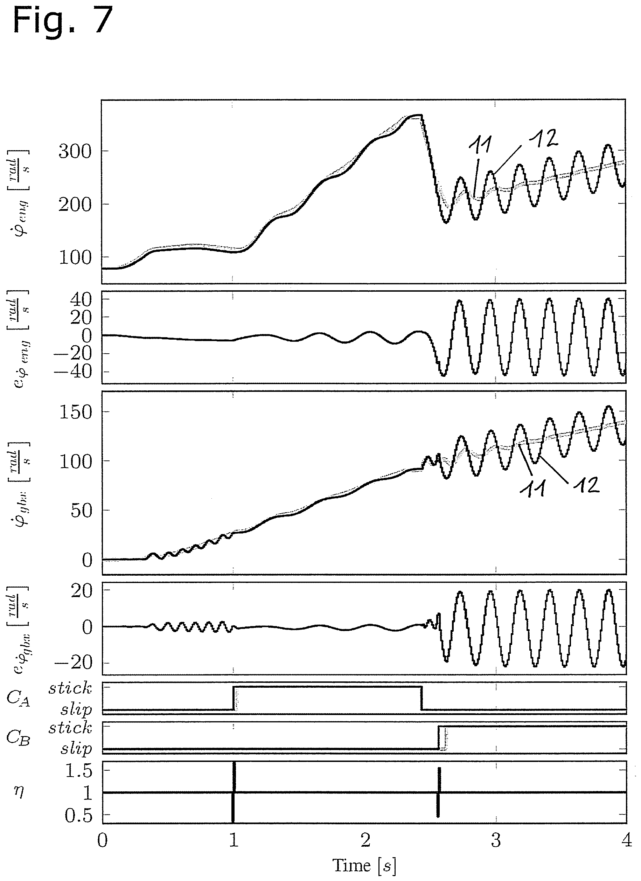

Another simulation was performed to demonstrate the effectiveness of the approach also with the continuous time model. The simulation was performed with the target sampling time $\Delta$ = 10 ms. The result in Fig. 7 shows the accurate detection of clutch locking events while of course for that sampling time quasi-continuous conditions are not fulfilled any more.

The simplified fixed time step modification algorithm was used for the precedent simulations. The exact modification algorithm was implemented additionally.

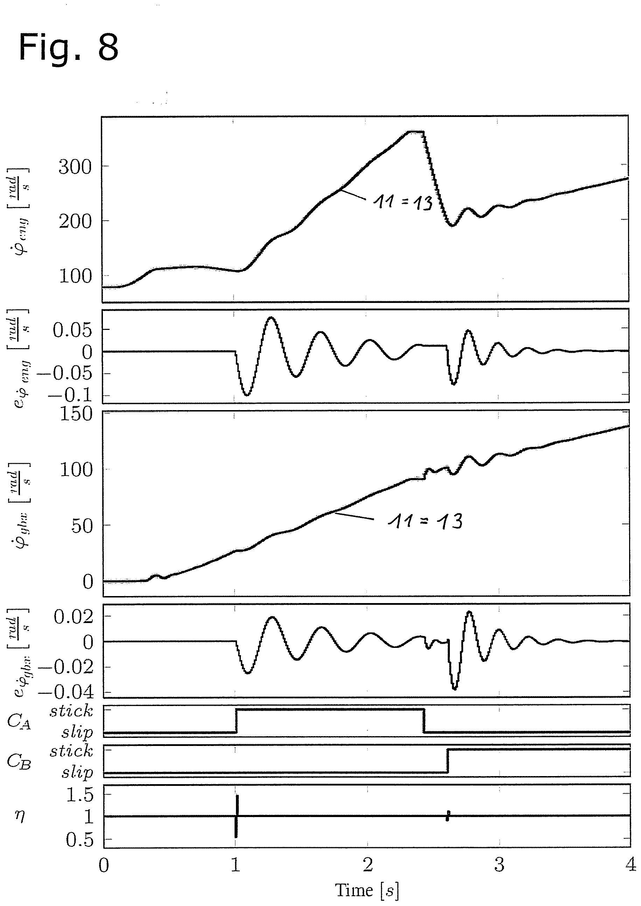

Fig. 8 compares the simulation results using both algorithms at a sampling time of $\Delta$ = 10 ms. The justification for the proposed approximation is underpinned by that comparison, since lines 11 and 13 can not be differentiated in the graphical representation.

It was demonstrated that for fixed step simulation the zero crossing detection of friction elements is the limiting factor for increasing the sampling step size. Implementing the fixed time step modification approach eliminates that limitation. A simplified algorithm is available that is convenient for fixed step implementation in real-time applications. The simplification was justified by simulation results. It was demonstrated that the sampling time can be increased up to the limits of system dynamics with accurate detection of zero slip speeds and fixed step correction. Application of the fixed time step modification approach is of course not limited to automotive drivetrain systems. The approach is useful for applications simulating friction elements on devices with limited computing power and fixed time execution.

The approach for the present invention is suitable for a complex hybrid drivetrain layout. An observer can be derived from the model and can be implemented in the drivetrain control unit. Closed-loop clutch control for gear shifting can profit from this approach. Additionally the influence of missed clutch break-away events on the model behaviour can be investigated.

Now the adaption of the model to reality will be explained in detail. The model is used to determine the current state of the system (reality). The next state of the model representing the system depends on its current state and the current input signals. Therefore the model accuracy suffers from inexactly calculated input signals, modelled phenomena as well as uncertain model parameters. To overcome the resulting model state drift a feedback loop from real sensor values ($y_{real}$) is introduced and the model is augmented to a so called Luenberger observer structure. The model output y is therefore split in signals that correspond to the available sensor values $y_{Mreal}$ and other signals $y_{Mvirt}$ that are of general interest for improving driveline control by knowledge of internal and not measured signals of the driveline (e.g. shaft torques):

$$\mathbf{y} = \begin{bmatrix} \mathbf{y}_{M,real}^T & \mathbf{y}_{M,virtual}^T \end{bmatrix}^T \qquad (25)$$

$$\mathbf{x}_{k+1} = \mathbf{x}_k + \Delta \left( \widehat{\mathbf{\Phi}}(\Delta) \, \mathbf{x}_k + \widehat{\mathbf{H}}(\Delta) \, \mathbf{u}_k + \widehat{\mathbf{L}}(\Delta) \, \mathbf{e}_k \right) \qquad (26)$$

$$\mathbf{e}_k = \mathbf{y}_{real,k} - \mathbf{y}_{M,real,k}$$

The matrix $\hat{\mathbf{L}}$ has to be designed for $y_{real}$ such that the observer error $e_k$ converges to zero. This can be guaranteed if the matrix $(\hat{\Phi}(\Delta) - \hat{\mathbf{L}}(\Delta)\mathbf{C})$ has all the eigenvalues inside a circle with center $(-\Delta^{-1} + 0j)$ and radius $\Delta^{-1}$ in the complex plane for the discrete time system description in (18). This is equivalent to all eigenvalues inside the unit circle for a standard discrete time system description as defined in (14). The allowed area of positions for the poles is therefore defined. One possibility to design the parameters of L is the method of pole-placing which allows explicit placing of poles at desired positions.

**Claims**

1.  A method for controlling the drivetrain of a vehicle, comprising several elements with at least one friction element ($C_a$, $C_b$), e.g. a clutch, comprising the following steps:

    (a) sampling physical data of the drivetrain, said physical data comprising at least the speed of a shaft of the gearbox;
    (b) operating a clock providing predefined time instants which are separated by given time intervals ($\Delta$);
    (c) calculating an output variable for controlling at least one element of the drivetrain in such predefined time instants ($t_1$, $t_2$, $t_3$);

    wherein in said predefined time instants ($t_1$, $t_2$, $t_3$) it is observed whether locking of the friction element ($C_a$, $C_b$) can occur by detecting zero crossing of slip speed within current time step;
    if such zero crossing is detected conducting the following steps:

    ($\alpha$) calculating the time of zero crossing of slip speed;
    ($\beta$) conducting the current calculation step for a shortened time interval ($\eta\Delta$), by using the time (t*) of zero crossing of slip speed instead of the next predefined time instant ($t_1$, $t_2$, $t_3$) for next calculation;

    and **characterised by** the next step:

    ($\gamma$) conducting the next calculation step for an adapted time interval, by using a predefined time instant ($t_1$, $t_2$, $t_3$) for next calculation to bring back the calculation back to fixed time steps.

2.  The method of claim 1, wherein at least one friction element ($C_a$, $C_b$) of the drivetrain is controlled.

3.  The method of one of claims 1 or 2, wherein a simulation model is used to calculate approximations of physical data which are not readily measurable or which can be measured with low quality only.

4.  The method of claim 3, wherein a discrete simulation model is used, in which at predefined time instants ($t_1$, $t_2$, $t_3$) which are separated by equal time intervals ($\Delta$) a calculation of the values of the next step is conducted.

5.  The method of one of claims 1 to 4, wherein an intermediate calculation step is conducted between each pair of consecutive time instants ($t_1$, $t_2$; $t_2$, $t_3$), wherein said intermediate calculation is conducted in the mid ($t_{1/2}$, $t_{3/2}$, $t_{5/2}$) of a time interval between two predefined time instants ($t_1$, $t_2$; $t_2$, $t_3$) if no zero crossing of slip speed is detected and at the time of zero crossing (t*) of slip speed zero crossing is detected.

6.  The method of claim 5, wherein the intermediate calculation step does not result in an output.

7.  The method of one of claims 1 to 6, wherein the simulation model contains different equations for unlocked clutches and locked clutches ($C_a$, $C_b$), respectively.

8.  The method of one of claims 1 to 7, wherein the drivetrain comprises at least two friction elements ($C_a$, $C_b$).

9.  The method of one of claims 1 to 8, wherein at least one friction element ($C_a$, $C_b$) is a dry clutch.

**Patentansprüche**

1.  Verfahren zum Steuern des Antriebsstrangs eines Fahrzeugs, umfassend mehrere Elemente mit mindestens einem

Reibelement ($C_a$, $C_b$), z. B. einer Kupplung, umfassend die folgenden Schritte:

(a) Abtasten von physikalischen Daten des Antriebsstrangs, wobei die physikalischen Daten zumindest die Drehzahl einer Welle des Getriebes umfassen;

(b) Betreiben einer Uhr, die vordefinierte Zeitpunkte bereitstellt, die durch jeweilige Zeitintervalle ($\Delta$) getrennt sind;

(c) Berechnen einer Ausgabevariable zum Steuern von mindestens einem Element des Antriebsstrangs zu diesen vordefinierten Zeitpunkten ($t_1$, $t_2$, $t_3$);

wobei zu den vordefinierten Zeitpunkten ($t_1$, $t_2$, $t_3$) festgestellt wird, ob ein Schließen des Reibelements ($C_a$, $C_b$) eintreten kann, indem ein Nulldurchgang einer Schlupfdrehzahl innerhalb eines aktuellen Zeitschritts erkannt wird; wenn ein solcher Nulldurchgang erkannt wird, Durchführen der folgenden Schritte:

($\alpha$) Berechnen der Zeit des Nulldurchgangs der Schlupfdrehzahl;

($\beta$) Durchführen des aktuellen Berechnungsschritts für ein verkürztes Zeitintervall ($\eta\Delta$) unter Verwendung der Zeit ($t^*$) des Nulldurchgangs der Schlupfdrehzahl anstelle des nächsten vordefinierten Zeitpunkts ($t_1$, $t_2$, $t_3$) für die nächste Berechnung; und

**gekennzeichnet durch** den nächsten Schritt:

($\gamma$) Durchführen des nächsten Berechnungsschritts für ein angepasstes Zeitintervall unter Verwendung eines vordefinierten Zeitpunkts ($t_1$, $t_2$, $t_3$) für die nächste Berechnung, um die Berechnung zu den festen Zeitschritten zurückzuführen.

2. Verfahren nach Anspruch 1, wobei mindestens ein Reibelement ($C_a$, $C_b$) des Antriebsstrangs gesteuert wird.

3. Verfahren nach einem der Ansprüche 1 oder 2, wobei ein Simulationsmodell verwendet wird, um Näherungen von physikalischen Daten zu berechnen, die nicht ohne Weiteres messbar sind oder nur in geringer Qualität gemessen werden können.

4. Verfahren nach Anspruch 3, wobei ein diskretes Simulationsmodell verwendet wird, bei dem zu vordefinierten Zeitpunkten ($t_1$, $t_2$, $t_3$), die durch gleiche Zeitintervalle ($\Delta$) getrennt sind, eine Berechnung der Werte des nächsten Schritts durchgeführt wird.

5. Verfahren nach einem der Ansprüche 1 bis 4, wobei ein Zwischenberechnungsschritt zwischen jedem Paar von aufeinanderfolgenden Zeitpunkten ($t_1$, $t_2$; $t_2$, $t_3$) durchgeführt wird; wobei die Zwischenberechnung in der Mitte ($t_{1/2}$, $t_{3/2}$, $t_{5/2}$) eines Zeitintervalls zwischen zwei vordefinierten Zeitpunkten ($t_1$, $t_2$; $t_2$, $t_3$) durchgeführt wird, wenn kein Nulldurchgang einer Schlupfdrehzahl erkannt wird und zur Zeit des Nulldurchgangs ($t^*$) der Schlupfdrehzahl ein Nulldurchgang erkannt wird.

6. Verfahren nach Anspruch 5, wobei der Zwischenberechnungsschritt keine Ausgabe zur Folge hat.

7. Verfahren nach einem der Ansprüche 1 bis 6, wobei das Simulationsmodell verschiedene Gleichungen für nicht geschlossene Kupplungen bzw. geschlossene Kupplungen ($C_a$, $C_b$) enthält.

8. Verfahren nach einem der Ansprüche 1 bis 7, wobei der Antriebsstrang mindestens zwei Reibelemente ($C_a$, $C_b$) umfasst.

9. Verfahren nach einem der Ansprüche 1 bis 8, wobei mindestens ein Reibelement ($C_a$, $C_b$) eine Trockenkupplung ist.

## Revendications

1. Procédé de commande de la transmission d'un véhicule comprenant plusieurs éléments ayant au moins un élément de friction ($C_a$, $C_b$) par exemple un embrayage comprenant les étapes suivantes, consistant à :

(a) prélever des données physiques de la transmission, ces données physiques comprenant au moins la vitesse de l'arbre de la boîte de vitesse,

(b) actionner une horloge fournissant des instants prédéfinis qui sont séparés par des intervalles de temps ($\Delta$) donnés,

(c) calculer une sortie variable pour commander au moins un élément de la transmission aux instants prédéfinis ($t_1$, $t_2$, $t_3$),

procédé selon lequel aux instants prédéfinis ($t_1$, $t_2$, $t_3$) on observe si un blocage de l'élément de friction ($C_a$, $C_b$) peut se produire en détectant le passage par zéro de la vitesse de glissement pendant l'étape chronologique actuelle, si un tel passage par zéro est détecté, effectuer les étapes suivantes consistant à :

($\alpha$) calculer l'instant de passage par zéro de la vitesse de glissement,

($\beta$) effectuer l'étape de calcul actuelle pendant un intervalle de temps diminué ($\eta\Delta$), en utilisant l'instant ($t^*$) du passage par zéro de la vitesse de glissement au lieu de l'instant prédéfini suivant ($t_1$, $t_2$, $t_3$) pour le calcul suivant,

**caractérisé par** une étape consistant à :

($\gamma$) effectuer l'étape de calcul suivante pendant un intervalle de temps adapté en utilisant un instant ($t_1$, $t_2$, $t_3$) prédéfini pour le calcul suivant de façon à ramener le calcul aux étapes chronologique fixées.

2. Procédé conforme à la revendication 1,
selon lequel
au moins un élément de friction ($C_a$, $C_b$) de la transmission est commandé.

3. Procédé conforme à l'une des revendications 1 et 2,
selon lequel
un modèle de simulation est utilisé pour calculer des approximations de données physiques qui ne sont pas facilement mesurables ou qui ne peuvent être mesurées qu'avec une faible qualité.

4. Procédé conforme à la revendication 3,
selon lequel
on utilise un modèle de simulation discret, dans lequel un calcul des valeurs de l'étape suivante est effectué à des instants prédéfinis ($t_1$, $t_2$, $t_3$) qui sont séparés par des intervalles de temps ($\Delta$) égaux.

5. Procédé conforme à l'une des revendications 1 à 4,
selon lequel
une étape de calcul intermédiaire est effectuée entre chaque paire d'instants ($t_1$, $t_2$ ; $t_2$, $t_3$) consécutifs, ce calcul intermédiaire étant effectué au milieu ($t_{1/2}$, $t_{3/2}$, $t_{5/2}$) d'un intervalle de temps entre deux instants prédéfinis ($t_1$, $t_2$ ; $t_2$, $t_3$) si aucun passage par zéro de la vitesse de glissement n'est détecté, et à l'instant du passage par zéro ($t^*$) de la vitesse de glissement si un passage par zéro est détecté.

6. Procédé conforme à la revendication 5,
selon lequel
l'étape de calcul intermédiaire n'aboutit pas à une sortie.

7. Procédé conforme à l'une des revendications 1 à 6,
selon lequel
le modèle de simulation comporte différentes équations respectivement pour des embrayages non bloqués et des embrayages bloqués ($C_a$, $C_b$).

8. Procédé conforme à l'une des revendications 1 à 7,
selon lequel
la transmission comprend au moins deux éléments de friction ($C_a$, $C_b$).

9. Procédé conforme à l'une des revendications 1 à 8,
selon lequel
au moins un élément de friction ($C_a$, $C_b$) est un embrayage sec.

# Fig. 1

# Fig. 2

Fig. 3

Fig. 4

EP 2 886 901 B1

# Fig. 5

# Fig. 6

## Fig. 7

## Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2141379 A
- WO 2008036014 A
- DE 102013200827
- DE 102012207364
- EP 2634058 A

### Non-patent literature cited in the description

- **A. SERRARENS ; M. DASSEN ; M. STEINBUCH.** Simulation and Control of an Automotive Dry Clutch. *American Control Conference, 2004. Proceedings of the 2004,* 2004, vol. 5, 4078-4083
- **H. OLSSON ; K. ASTRÖM ; C. CANUDAS DE WIT ; M. GÄFVERT ; P. LISCHINSKY.** Friction Models and Friction Compensation. *European Journal of Control,* 1998, vol. 4 (3), 176-195
- Automotive Clutch Models for Real Time Simulation. **M. BATAUS ; A. MACIAC.** Proceedings of the Romanian Academy, Series A. The publishing house of the Romanian Academy, 2011, vol. 12, 109-116
- **D. D. GIRARD.** Fixed step friction model. *Proceedings of the 1983 summer computer simulation conference,* 1983, 302-308
- **R. KIKUUWE ; N. TAKESUE ; A. SANO ; H. MOCHIYAMA ; H. FUJIMOTO.** Fixed-Step Friction Simulation: From Classical Coulomb Model To Modern Continuous Models. *Intelligent Robots and Systems, 2005. (IROS 2005). 2005 IEEE/RSJ International Conference on,* 2005, 1009-1016